# EUROPEAN PATENT APPLICATION

(11) **EP 3 734 765 A1**
(43) Date of publication of application: **04.11.2020**
(21) Application number: 19171729.7
(22) Date of filing: 30.04.2019
(51) Int. Cl.: H01R 4/18, H01R 43/048, H05B 3/06, H05B 3/34

(54) **ELECTRICAL CONNECTION ASSEMBLY, METHOD OF ELECTRICALLY CONNECTING A CONDUCTOR OF A CABLE WITH A METALLIC TEXTILE**

(71) Applicant: TE Connectivity Germany GmbH, 64625 Bensheim (DE); TE Connectivity Corporation, Berwyn, PA 19312 (US); TE Connectivity India Private Limited, Bangalore 560048 (IN); Tyco Electronics Belgium EC bvba, 8020 Oostkamp (BE); Tyco Electronics UK Ltd, Wiltshire SN3 5HH (GB)
(72) Inventor: Muth, Christopher, 63225 Langen (DE); Nickel, Jens, 69469 Weinheim (DE); Van Cauwenberge, Jan, 9880 Aalter (BE); Shettar, Vinayakumar, 587201 Badami (IN); Myer, John Mark, Millersville, PA Pennsylvania 17551 (US); Marsh, John, London, W7 2DA (GB)
(74) Representative: Grünecker Patent- und Rechtsanwälte PartG mbB

(57) **Abstract**

The application shows an electrical connection assembly (100), comprising a cable (10) with a conductor (11), a metallic textile (20) in electrical contact with the conductor (11), the electrical connection assembly (100) further comprising a crimp element (50), wherein the crimp element (50) creates pressure between the conductor (11) and the metallic textile (20). Further, the application shows a method of electrically connecting a conductor (11) of a cable (10) with a metallic textile (20), wherein a crimp element (50) is used for pressing the conductor (11) and the metallic textile (20) into an electrical contact.

## Description

The invention relates to an electrical connection assembly and a method of electrically connecting a conductor of a cable with a metallic textile.

Electrical connection assemblies can, for example, be used in heating systems of automobiles. Such heating systems can comprise mat-like flexible electrical heating elements with a metallic textile for resistive heating. In current solutions it is, however, difficult to make an electrical connection to these heating elements.

It is the object of the invention to provide a solution in which the electrical connection-making is easy.

This object is achieved by an electrical connection assembly, comprising a cable with a conductor, a metallic textile in electrical contact with the conductor, the electrical connection assembly further comprising a crimp element, wherein the crimp element creates a pressure between the conductor and the metallic textile.

The object is further achieved by a method of electrically connecting a conductor of a cable with a metallic textile, wherein a crimp element is used for pressing the conductor and the metallic textile into an electrical contact.

The solution according to the invention can further be improved by the following further developments and advantageous embodiments, which are independent of each other and can be combined arbitrarily, as desired.

In order to make the assembly particularly easy, an insulating textile can be located between the crimp element and the metallic textile. In such an embodiment, it is, for example, not necessary to remove the insulating textile before the electrical connection is made.

If the insulating textile is located between the metallic textile and the crimp element, a direct electrical connection between the conductor and the metallic textile can be present. The insulating textile can, for example, serve as a force-transmitting element for transmitting the pressing force from the crimp element to the connection between the metallic textile and the conductor. The insulating textile can also help to distribute the forces better and to avoid localized force peaks which might cause damage.

In a different solution, the insulating textile could be located between the conductor and the metallic textile. An electrical connection can be present between the metallic textile and the crimp element. The crimp element can then contact the conductor at a different location away from the connection.

In another development, no insulating textile is present, at least in a termination area. In such an embodiment, the crimp element, the metallic textile and the conductor can be in direct contact and thus in electrical contact with each other. This can lead to a low resistance and high conductivity of the electrical connection assembly.

The metallic textile and the insulating textile can be parts of an electrical element. The electrical element can, for example, be an electrical heating element or a flexible electrical conduction element. The metallic textile can be a functional area of the electrical element.

For example, the metallic textile and the insulating textile can be parts of a contact section of the electrical element. The contact section can be electrically connected to further parts, such as a heating section.

The electrical element and the metallic textile can have two or more contact areas for contacting with different electrical potentials. For example, one contact area can be adapted for contacting a positive voltage supply while a second contact area can be adapted to contact a ground.

The contact section and/or the contact area can be strip-shaped in order to allow an easy insertion into the crimp section.

The metallic textile can be a woven textile to allow an easy production. In an alternative, the metallic textile can be a knitted textile to achieve a high flexibility. Other possibilities of creating a textile with a two-dimensional structure from fibres such as crocheting, knotting, felting, braiding or another technology are also possible.

The metallic textile can in particular comprise threads comprising metal or consisting of metal in order to be able to conduct electricity. The threads can, for example, be covered or coated with metal.

In an advantageous embodiment, the insulating textile can be mechanically interconnected with the metallic textile. This can help to increase the stability.

For example, the insulating textile can be interwoven with the metallic textile. Parts of the metallic textile, for example threads, can be woven into parts of the insulating textile or vice versa.

The crimp element can surround the conductor and/or the metallic textile. This can help to achieve a good pressing connection. The pressing force can be directed to an inside or towards an area defined by the surrounding crimp element.

The crimp element can comprise at least one crimp section adapted for being deformed.

The crimp element can achieve the pressure through a deformation. The deformation can be plastic and/or elastic. Preferably, the crimp element creates a pressing force acting onto the metallic textile and/or the conductor in the deformed state.

The crimp elements, in particular at the crimp section, can have a C-shaped cross-section, at least in a state before it is deformed, in order to achieve the electrical connection. At least two legs can protrude from a base, in particular in different or opposite directions. The legs and the base can define a receptacle for the metallic textile and the conductor. During the deformation, the ends of the two legs can be brought into contact with each other, so that the legs and the base surround the metallic textile. The metallic textile can thus be located in the space defined by the crimp element in the deformed state. In the deformed state, the crimp element can form a closed ring structure around the conductor and the metallic textile.

A set for an electrical connection assembly according to the invention can comprise the elements of the electrical connection assembly in a non-assembled and/or non-deformed state. The set can, for example, comprise a cable with a conductor, a metallic textile and/or a crimp element.

In an advantageous embodiment of the method, the metallic textile and the conductor are inserted into a receptacle formed by the crimp element and the crimp element is subsequently crimped around the metallic textile and the conductor.

Advantageously, the conductor is first joined with the metallic textile and the combination of the two is then inserted into the receptacle of the crimp element. For example, the conductor can be placed next to or onto the metallic textile. Such an embodiment can be easy to process in an automatic manner.

The metallic textile and/or the insulating textile can be at least partially cut, for example by cutting slits into them, in order to make a subsequent deformation easier.

In order to make the insertion easier, the metallic textile can be at least temporarily deformed before it is inserted into the receptacle. For example, the metallic textile can be deformed before or after the conductor is inserted. The deformation can in particular comprise a rolling in a sideways direction. The metallic textile can then form a mainly cylindrical section.

In an alternative, the metallic textile is first inserted into the receptacle, and the conductor is inserted subsequently.

The invention will now be described in greater detail and in an exemplary manner using advantageous embodiments and with reference to the drawings. The described embodiments are only possible configurations in which, however, the individual features as described above can be provided independently of one another or can be omitted.

In the figures:
- Fig. 1: shows a schematic perspective view of a first step of a method;
- Fig. 2: shows a schematic perspective view of a second step of the method;
- Fig. 3: shows a schematic perspective view of a third step of the method;
- Fig. 4: shows a schematic perspective view of a fourth step of the method;
- Fig. 5: shows a cross section through an electrical connection assembly achieved by a method of Figs. 1 to 4;
- Fig. 6: shows a schematic perspective view of a set for an electrical connection assembly produced by a second method;
- Fig. 7: shows a cross-section through an electrical connection assembly achieved by the second method;
- Fig. 8: shows a schematic perspective view of an electrical connection assembly for a heating element;
- Fig. 9: shows a schematic perspective view of a set for an electrical connection assembly;
- Fig. 10: shows a schematic perspective view of the set for an electrical connection assembly of Fig. 9 in a semi-assembled state;
- Fig. 11: shows a schematic perspective view of a further embodiment of an electrical connection assembly.

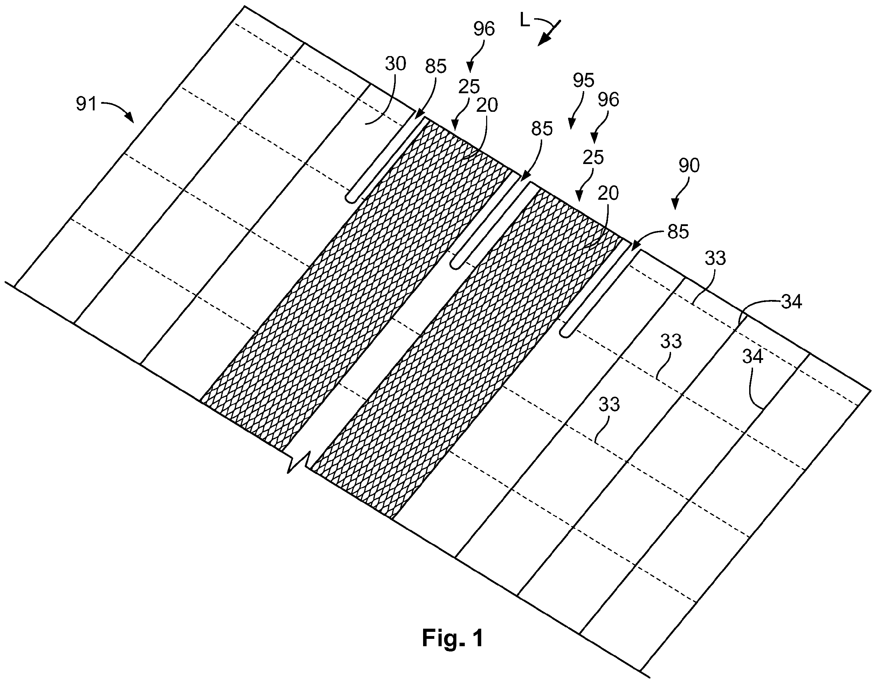

In Figs. 1 to 4, four steps of a method of electrically connecting a conductor 11 of a cable 10 with a metallic textile 20 are shown.

The metallic textile 20 can be a part of a contact section 95 of an electrical element 90, for example an electrical heating element 91. The contact section 95 can comprise two contact areas 96, one for a ground connection and one for a voltage connection. Each of the contact areas 96 is strip-shaped.

The metallic textile 20 is located on an insulating textile 30. The metallic textile 20 and the insulating textile 13 can be interconnected, for example by being interwoven. The metallic textile 20 and the insulating textile can be woven, knitted or produced in a similar manner to achieve a two-dimensional fabric or cloth. Further conductive threads like conductors 33 and heating threads 34 can be woven into the insulating textile 30.

In Fig. 1, a first step of the method has been performed. Slits 85 have been cut into the insulating textile 30 along a longitudinal direction L in order to give the end parts 25 of the conducting metallic textile 20 movability.

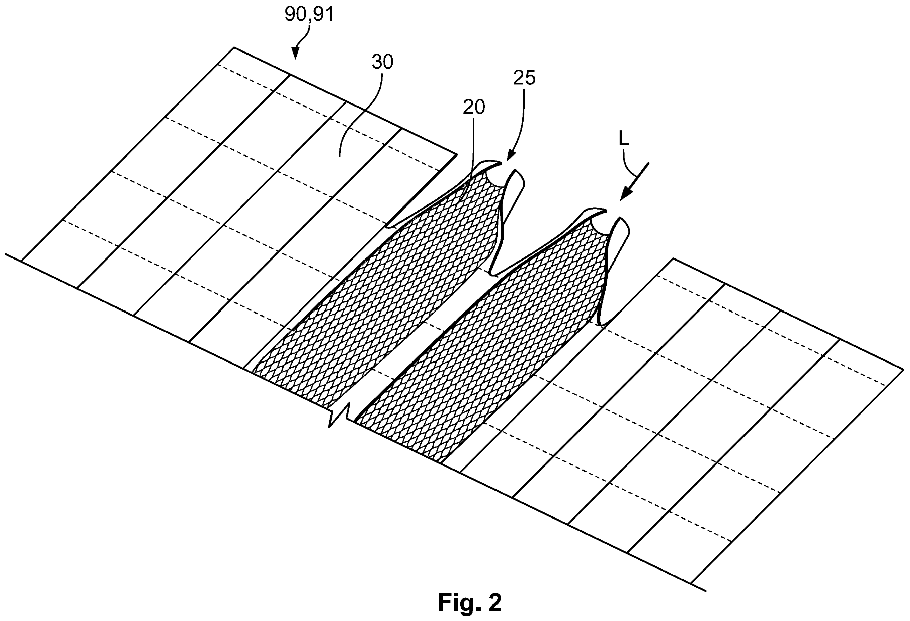

In a second step shown in Fig. 2, the end parts 25 are deformed sideways so that they at least partially form a basically circular or cylindrical cross section.

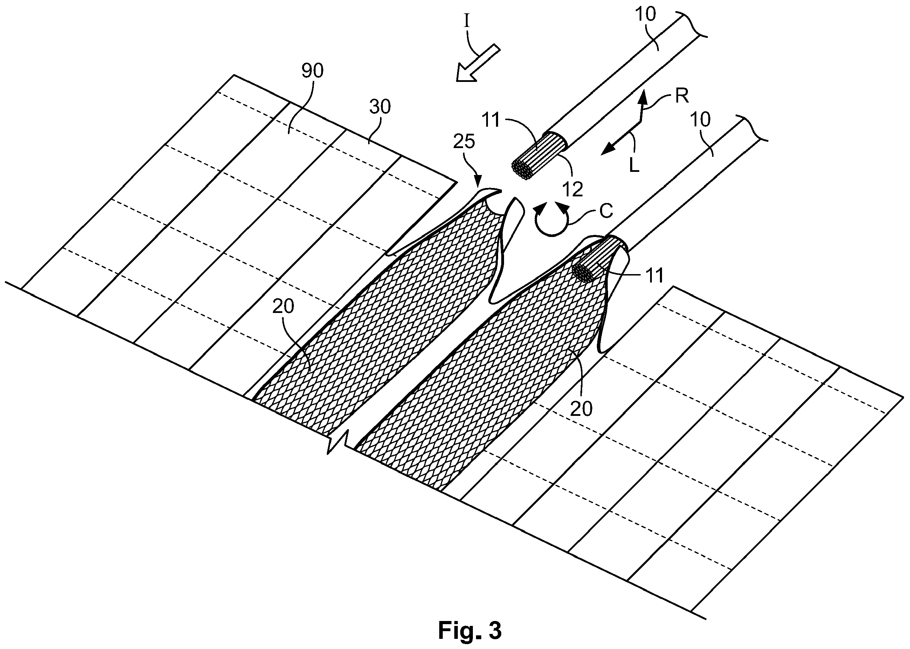

In a third step shown in Fig. 3, a cable 10 with a conductor 11 is inserted along the insertion direction I, which is parallel to the longitudinal direction L, into the cylindrical end parts 25, so that the cylindrical end parts 25 surround the conductor 11 along a circumferential direction C. At the outer side of the parts 25, the insulating textile 30 is present.

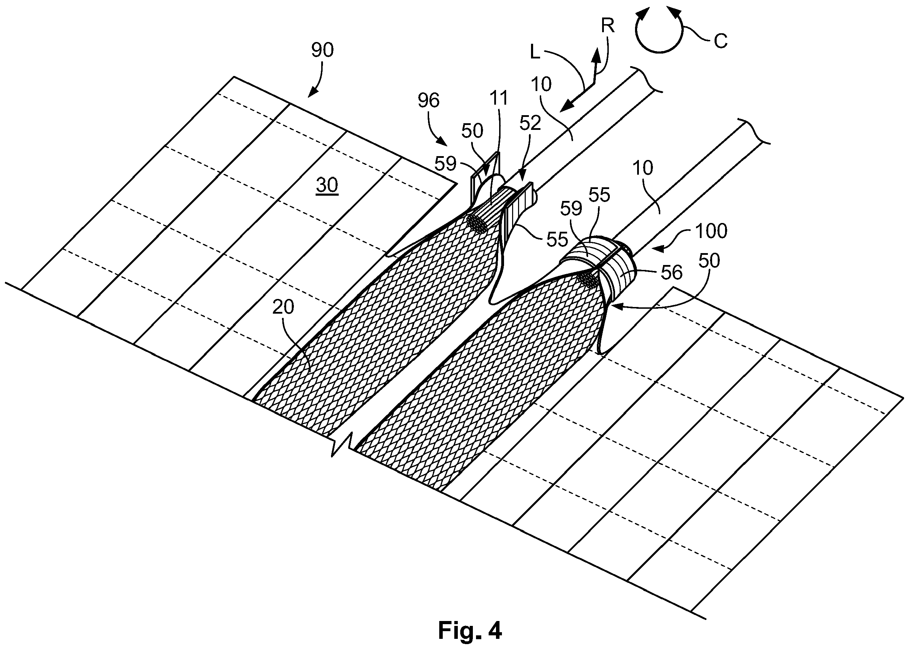

Fig. 4 shows a fourth step in which the end parts 25 are inserted into crimp elements 50, in particular in receptacles 52 formed by the crimp element 50. Subsequently, the crimp element 50, in particular a crimp section 55, is deformed so that it surrounds the conductor 11, the metallic textile 20 and the insulating textile 30. The crimp section 55 is then closed along the circumferential direction C and creates a press fit in particular between the conductor 11 and the metallic textile 20 so that a reliable electrical contact is achieved between the two.

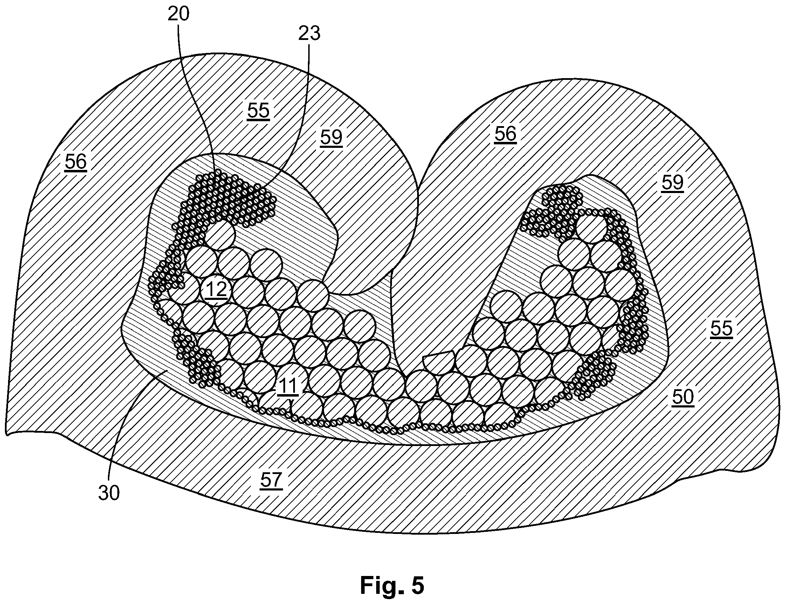

Fig. 5 shows a cross-section through an embodiment of an electrical connection assembly 100 created by the method of Figs. 1 to 4. The crimp section 55 comprises two legs 59 embodied as crimp flanks 56 attached to a base 57. The crimp section 55 defines a volume in which the electrical conductor 11, the metallic textile 20 and the insulating textile 30 are located. The crimp element 50 creates an indirect press fit between the conductor 11 and the metallic textile 20 through the insulating textile 30.

The conductor 11 comprises several single strands 12 but could, in another example, also comprise only one thick wire or strand 12. Similarly, the metallic textile 20 comprises several threads 23 which can be made from metal or comprise metal, for example in the form of a coating.

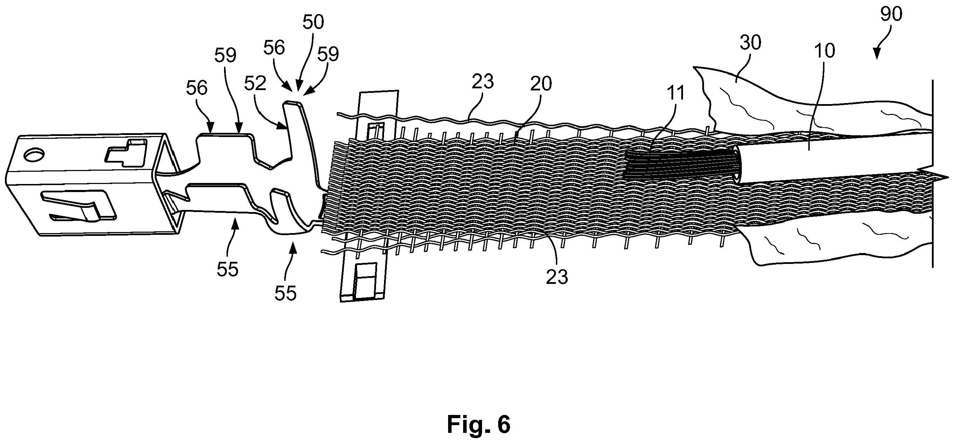

Fig. 6 shows a further possible embodiment. In this example, the insulating textile 30 has been removed partially from the electrical element 90. Through this, a direct pressing connection between the crimp section 55 of the crimp element 50, the metallic textile 20 and the conductor 11 can be achieved. The insulating textile 30 can, for example, be removed by cutting or by applying heat.

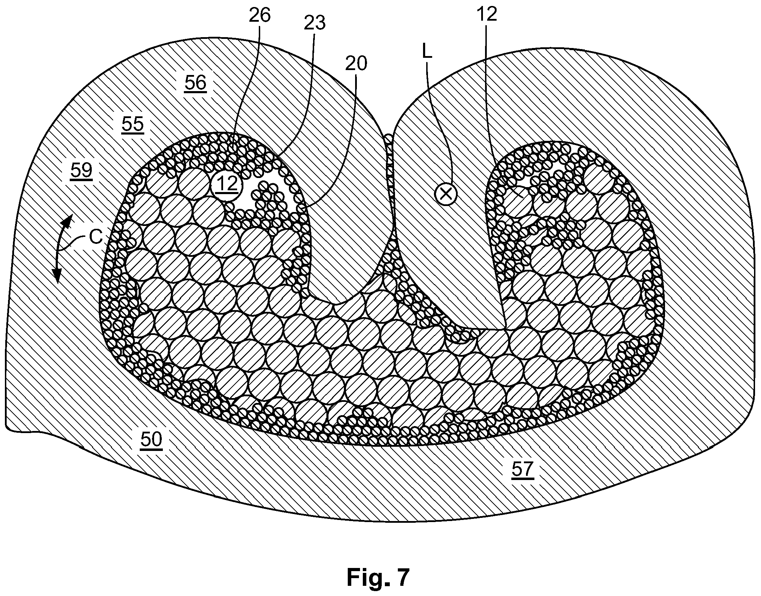

In Fig. 7, a cross-section through an electrical connection assembly 100 created from the components in Fig. 6 is shown. It can be seen that the strands 12 of the connector 11, the threads 23 of the metallic textile 20 and the crimp element 50 are in direct electrical and mechanical contact. Again, the crimp section 55 is closed along the circumferential direction C. Two legs 59 or crimp flanks 56 have been bent towards each other so that their ends contact. The plastic deformation of the crimp section 55 with a high force results in a pressing force that remains even after the active deformation step and creates constant pressure afterwards.

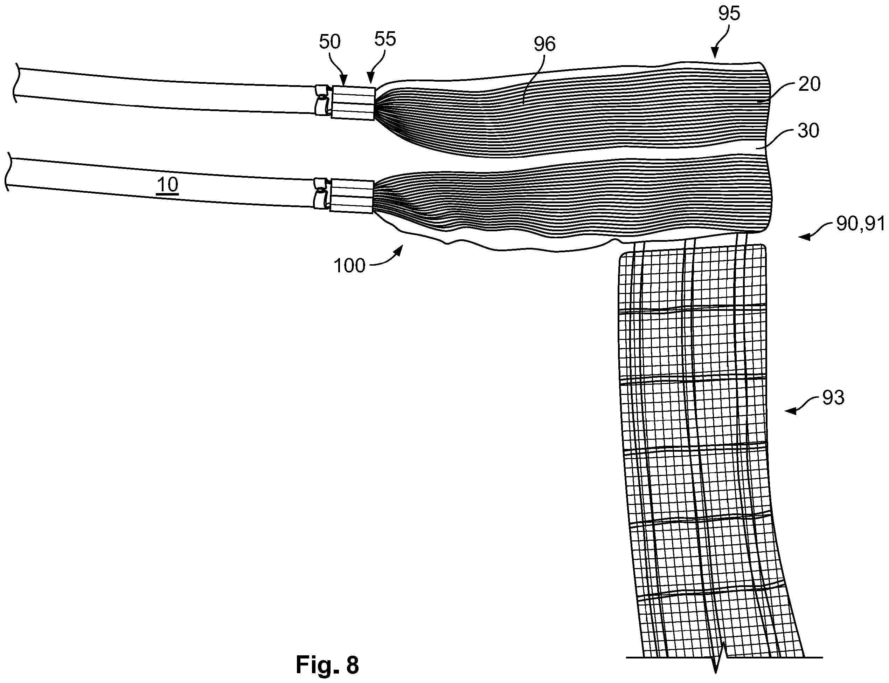

Fig. 8 shows an entire electrical element 90 in the form of an electrical heating element 91. The electrical element 90 comprises a heating section 93 that is electrically connected to the contact area 96 to which in turn the cables 10 are attached. In the contact area 96, two strips of metallic textile 20 are present, both being located on top of an insulating textile 13. The metallic textile 20 are attached to the cables 10 via crimp elements 50. This allows an easy connection making.

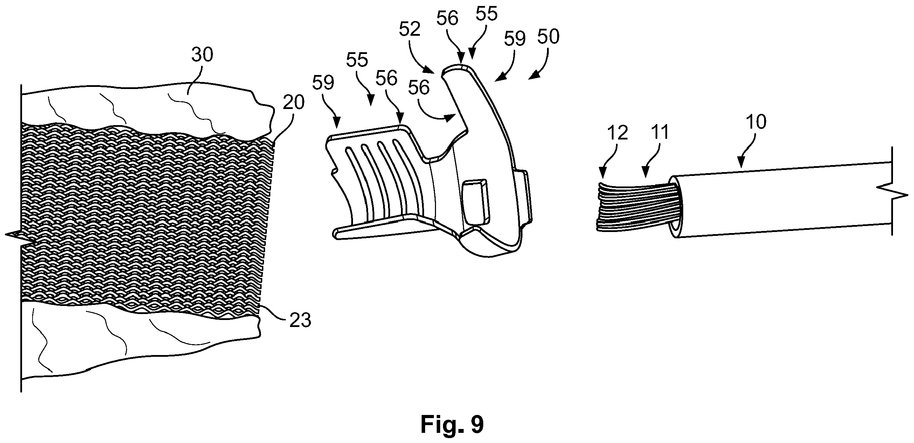

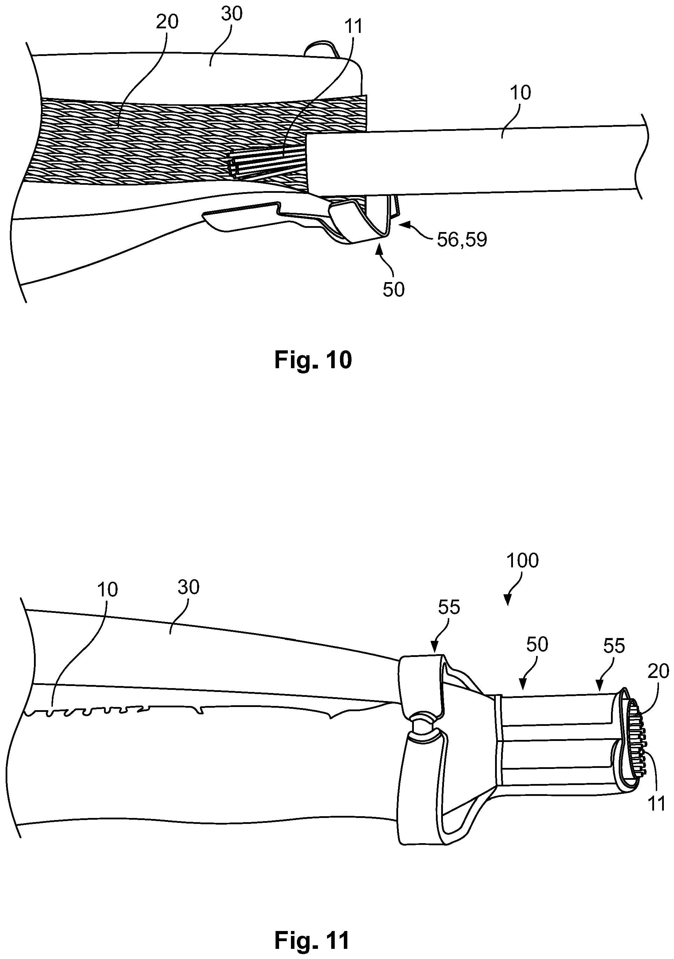

In Fig. 9, a set for an electrical connection assembly 100 is shown. The set comprises a cable 10 with a conductor 11 comprising several single strands 12, a crimp element 50 with two crimp sections 55, and a metallic textile 20 attached to an insulating textile 13. As shown in Fig. 10, the conductor 11 of the cable 10 can be wrapped with the metallic textile 20 and inserted into the crimp element 50.

In Fig. 11, a further embodiment of an electrical connection assembly 100, similar to the one produced from the embodiment of Figs. 9 and 10, is shown. In this embodiment, however, the metallic textile 20, the insulating textile 30 and the cable 10 protrude to the same side away from the crimp element 50.

### REFERENCE SIGNS

- 10: cable
- 11: conductor
- 12: strand
- 20: metallic textile
- 23: thread
- 25: end part
- 30: insulating textile
- 33: conductor
- 34: heating thread
- 50: crimp element
- 52: receptacle
- 55: crimp section
- 56: crimp flank
- 57: base
- 59: leg
- 85: slit
- 90: electrical element
- 91: electrical heating element
- 93: heating section
- 95: contact section
- 96: contact area
- 100: electrical connection assembly

- C: circumferential direction
- I: insertion direction
- L: longitudinal direction
- R: radial direction

## Claims

1. Electrical connection assembly (100), comprising a cable (10) with a conductor (11), a metallic textile (20) in electrical contact with the conductor (11), the electrical connection assembly (100) further comprising a crimp element (50), wherein the crimp element (50) creates a pressure between the conductor (11) and the metallic textile (20).

2. Electrical connection assembly (100) according to claim 1, wherein an insulating textile (30) is located between the crimp element (50) and the metallic textile (20).

3. Electrical connection assembly (100) according to claim 2, wherein the metallic textile (20) and the insulating textile (30) are part of an electrical element (90).

4. Electrical connection assembly (100) according to one of claims 2 or 3, wherein the metallic textile (20) and the insulating textile (30) are part of a contact section (96) of the electrical element (90).

5. Electrical connection assembly (100) according to one of claims 2 to 4, wherein the insulating textile (30) is mechanically interconnected with the metallic textile (20).

6. Electrical connection assembly (100) according to one of claims 1 to 5, wherein the crimp element (50) surrounds the conductor (11) and/or the metallic textile (20).

7. Method of electrically connecting a conductor (11) of a cable (10) with a metallic textile (20), wherein a crimp element (50) is used for pressing the conductor (11) and the metallic textile (20) into an electrical contact.

8. Method according to claim 7, wherein an insulating textile (30) is located between the crimp element (50) and the metallic textile (20).

9. Method according to one of claims 7 or 8, wherein the metallic textile (20) and the conductor (11) are inserted into a receptacle (52) formed by the crimp element (50) and the crimp element (50) is subsequently crimped around the metallic textile (20) and the conductor (11).

10. Method according to claim 9, wherein the conductor (11) is first joined with the metallic textile (20) and the combination of the two is then inserted into the receptacle (52) of the crimp element (50).
